Europäisches Patentamt

**European Patent Office**

Office européen des brevets

(19)

(11) **EP 1 686 443 A1**

(12) **EUROPEAN PATENT APPLICATION**

(43) Date of publication:
**02.08.2006 Bulletin 2006/31**

(51) Int Cl.:
*G05B 23/02* (2006.01)

(21) Application number: **06250485.7**

(22) Date of filing: **30.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.02.2005 US 906052**

(71) Applicant: **GENERAL ELECTRIC COMPANY Schenectady, NY 12345 (US)**

(72) Inventors:
• **Hershey, John Erik New York 12019 (US)**
• **Bonissone, Pietro Patrone New York 12308 (US)**

• **Hatch, Charles Terrace Nevada 89410 (US)**
• **Tomlinson, Harold Woodruff New York 12302 (US)**
• **Goebel, Kai Frank New York 12019 (US)**
• **Iyer, Naresh Sundaram New York 12065 (US)**
• **Yan, Weizhong New York 12065 (US)**

(74) Representative: **Pedder, James Cuthbert et al London Patent Operation General Electric International Inc. 15 John Adam Street GB-London WC2N 6LU (GB)**

(54) **Methods, systems, and computer program products for implementing condition monitoring activities**

(57) Methods, systems, and computer program products are provided for implementing condition monitoring activities. Systems include a processor (204) in communication with a machine (202) being monitored. The processor (204) receives signals output by the machine (202) via a signal conversion element (210) associated with the machine (202). Systems also include a display device (205) in communication with the processor (204) for providing signatures of the signals received from the signal conversion element (210). Systems further include a means (204) for identifying, isolating, and capturing a signature (212) from the signatures presented on the display device (205). The systems also include a means (204) for digitizing and recording the signature (212) as an event kernel, normalizing the event kernel by performing a mean removal, and normalizing the energy to unity on results of the mean removal. Systems further include a storage device (206) for storing normalized event kernels.

FIG. 2

**Description**

The invention relates to condition monitoring, and more particularly, to methods, systems, and computer program products for implementing condition monitoring activities for machines having well-defined operating cycles.

Monitoring the health of a system such as a mechanical equipment device is integral to the ongoing success of the operations performed thereon. Most modernized equipment devices today utilize some form of automated monitoring systems. Without these monitoring systems, operational issues may go unnoticed or undetected, resulting in system failure and delays in operational and maintenance activities, all of which can be potentially costly.

Types of conditions monitored by these systems include structural defects, temperature, speed, and torque, to name a few. Sensor devices may be used to monitor and measure these conditions and transducers may be utilized for converting the measurements into a graphical form that enables an evaluator to read and analyze the measurements.

The type of monitoring performed on a device is clearly dependent upon the type of equipment being monitored as well as the nature of its operations. Accordingly, the type of sensors utilized for monitoring conditions will also depend upon the nature of the equipment and the operations performed thereon. For example, critical operations (e.g., life-saving processes) may require some redundancy in the monitoring activities performed on an equipment device to ensure the accuracy and reliability of the equipment's informational output.

Sensors operating on regular running machines, or those which exhibit periodic cycles of equal time characteristics (e.g., a rotating machine), generally produce signatures of similar patterns due to the cyclic nature of the operations performed on the machines. These patterns can provide some qualitative information regarding the optimal performance of the machine due to the cyclical nature of the operations. It would be desirable to provide a condition monitoring system that utilizes the signature patterns associated with regular running machines to identify and remedy issues resulting from the machine operations.

Exemplary embodiments of the invention relate to methods, systems, and computer program products for implementing condition monitoring activities. Methods include receiving signals output by a machine being monitored, isolating and capturing a signature from the signals, digitizing and recording the signature as an event kernel, and normalizing the event kernel by performing a mean removal and normalizing the energy to unity on results of the mean removal.

Systems for implementing condition monitoring activities include a processor in communication with a machine being monitored. The processor receives signals output by the machine via a signal conversion element associated with the machine. Systems also include a display device in communication with the processor for providing signatures of the signals received from the signal conversion element. Systems further include a means for identifying, isolating, and capturing a signature from the signatures presented on the display device. The system also includes a means for digitizing and recording the signature as an event kernel, a means for normalizing the event kernel by performing a mean removal, and a means for normalizing the energy to unity on results of the mean removal. Systems further include a storage device for storing normalized event kernels.

Computer program products for implementing condition monitoring activities include instructions for performing a method. The method includes receiving signals output by a machine being monitored, isolating and capturing a signature from the signals, digitizing and recording the signature as an event kernel, and normalizing the event kernel by performing a mean removal and normalizing the energy to unity on results of the mean removal.

The invention will now be described in greater detail, by way of example, with reference to the drawings, in which:-

FIG. 1 is a graphical representation of three traces of sample signature data captured by an equipment monitor in the prior art;

FIG. 2 is a block diagram of a system upon which the condition monitoring activities may be implemented in exemplary embodiments;

FIG. 3 is a flow diagram describing a process for conducting condition monitoring activities in exemplary embodiments;

FIG. 4 is a graphical representation of sample signature data including a signature of interest upon which the condition monitoring activities may be implemented in exemplary embodiments;

FIG. 5 is a graphical representation of a sample normalized event kernel of the signature of interest identified in FIG. 3, and is generated via the condition monitoring activities in exemplary embodiments;

FIG. 6 is a graphical representation of a sample acyclic autocorrelation of the normalized event kernel depicted in FIG. 5 in exemplary embodiments;

FIG. 7 is a graphical representation of a sample cross-correlation of the normalized event kernel depicted in FIG. 5 against the first trace shown in FIG. 1, in exemplary embodiments;

FIG. 8 is a graphical representation of a sample cross-correlation of the normalized event kernel depicted in FIG. 5 against the middle trace shown in FIG. 1, in exemplary embodiments;

FIG. 9 is a graphical representation of a time trace and its corresponding signatures reflected in a power spectral density plot in alternative exemplary embodiments; and

FIG. 10 is a system for performing active acoustic sensing in alternative exemplary embodiments.

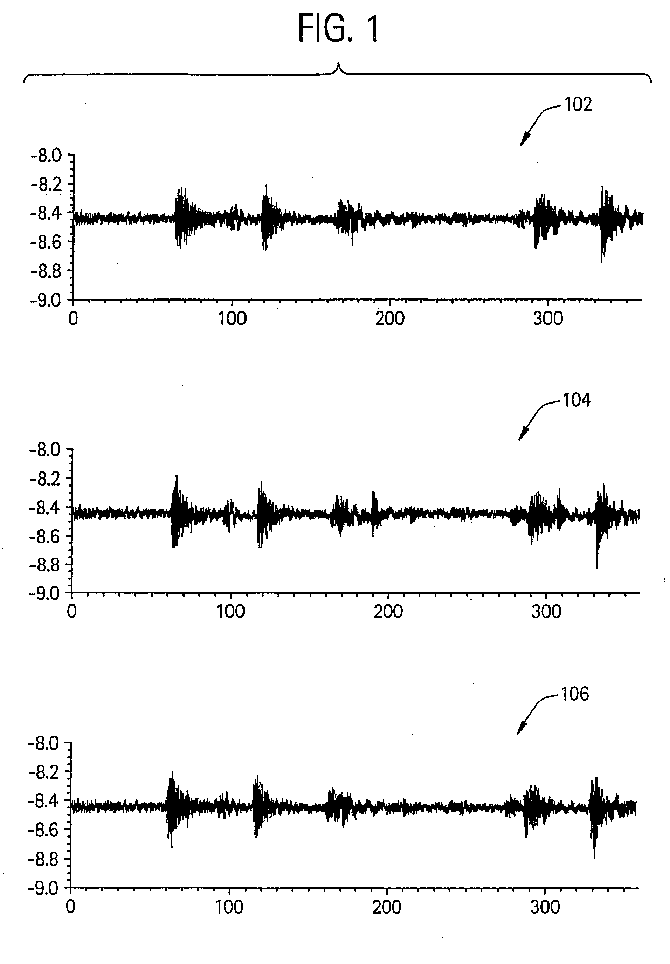

The condition monitoring system performs pattern recognition for event identification (i.e., time-of-occurrence estimation and event type classification) utilizing a signature associated with a regularly running machine. The signature may be an acoustic/seismic signature. A regularly running machine refers to one that exhibits periodic cycles of equal time characteristics. For example, the regularly running machine may be a rotating machine under a constant load. The signature is digitalized and normalized utilizing a two-step process, resulting in a normalized event kernel. Computations such as autocorrelations and cross-correlations may be performed on the normalized event kernel. The signature data produced from the rotating machine may be referenced to a 360-degree cycle as shown in the prior art diagram of FIG. 1. The signature data depicted in FIG. 1 represents a three monitor traces 102, 104, and 106 for crosshead accelerometer data.

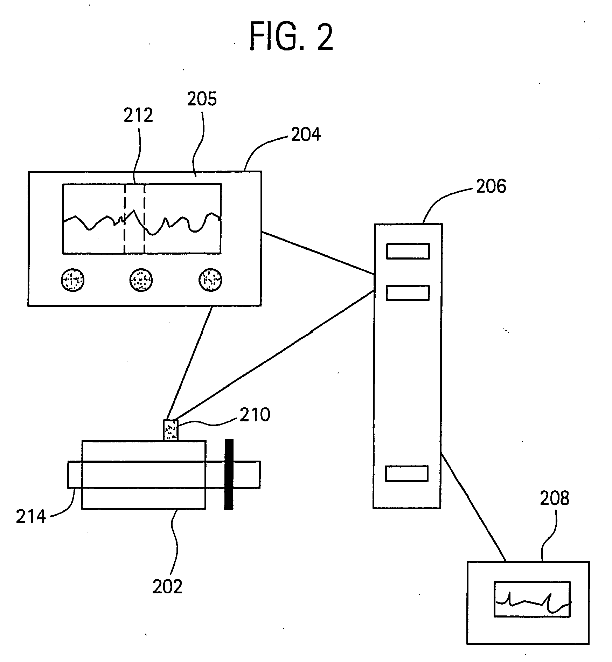

Turning now to FIG. 2, a system upon which the condition monitoring activities may be implemented in exemplary embodiments will now be described. FIG. 2 includes equipment 202 in communication with a signature identification and capture station 204 and a correlator bank 206.

Equipment 202 refers to the machine that is being monitored. Equipment 202 may be any type of regular running machine or mechanical device as described above. For purposes of illustration, equipment 202 is a turbine engine. Equipment 202 includes a rotor 214, which further comprises a shaft (not shown). Equipment 202 also includes a signal conversion element 210 (e.g., a transducer and/or shaft encoder) that converts acoustic/seismic data output from equipment 202 into a digitized form. The shaft encoder, for example, may output digital pulses corresponding to incremental angular motion of the equipment shaft and registers the signatures produced with the shaft's angular position.

Signature identification and capture station 204 includes a display device 205 for presenting visual data (traces) received by equipment 202. Signature identification and capture station 204 may comprise a processor device executing a module (e.g., software application) that enables an operator of the signature identification and capture station 204 to identify and select portions of the monitor trace on the display device 205 to be used in the implementation of the condition monitoring activities described herein. A selected signature 212 from the trace is shown on the display device 205 of signature identification and capture station 204.

Correlator bank 206 refers to a collection of correlators or kernels, which may represent different instances of a same event, or different types of events. The correlations may be implemented utilizing a variety of techniques (e.g., convolution in the Fourier domain). Correlator bank 206 may comprise a storage device. Correlator bank 206 is in communication with a monitor 208. Monitor 208 displays the cross-correlations of the event kernels against operational data as described further herein. Monitor 208 may include exceedance alarms, logging, and statistical capabilities. While shown in FIG. 2 as separate physical devices, it will be understood that one or more of monitor 208, correlator bank 206, and signature identification and capture station 204 may comprise a single unit (e.g., a high-speed computer processor). Alternatively, these elements may be incorporated into the equipment 202 being monitored.

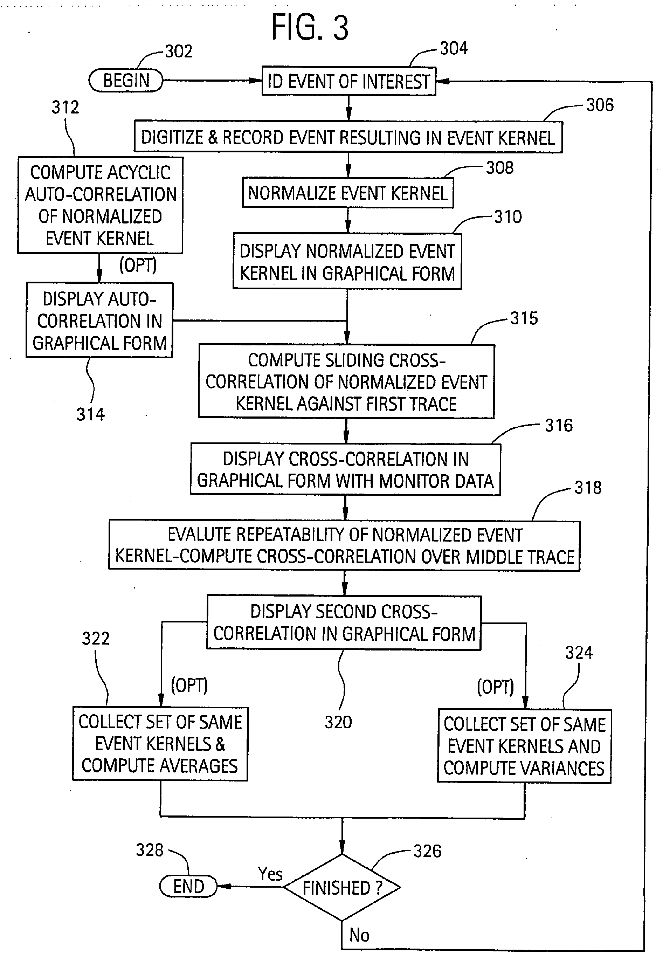

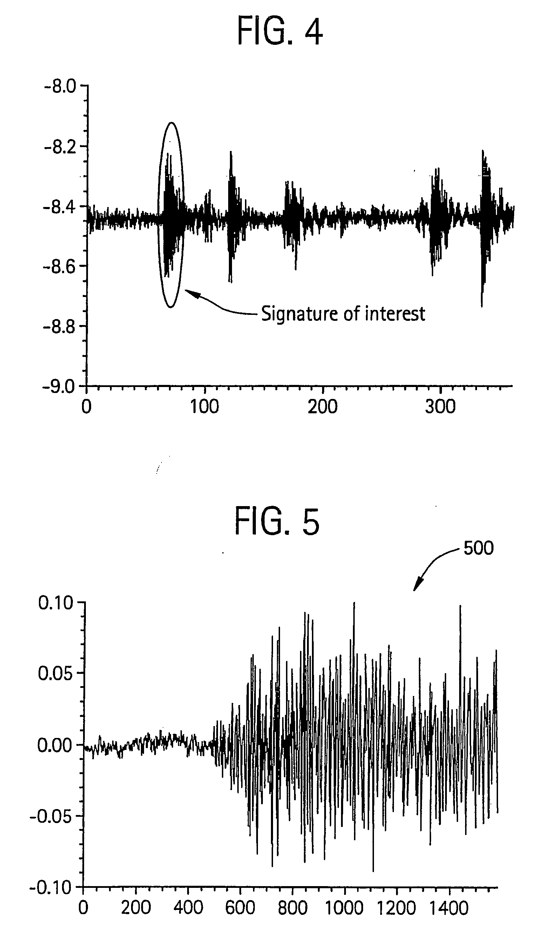

Turning now to FIG. 3, a flow diagram describing a process for implementing the condition monitoring activities in exemplary embodiments will now be described. For ease of explanation, it is assumed that the acoustic/seismic data generated by the equipment 202 has been transmitted to the signature identification and capture station 204. The process begins at step 302, whereby an operator of the signature identification and capture station 204 who is monitoring a trace associated with equipment 202 identifies an event (i.e., signature) of interest 212 at step 304. The operator locates events of interest in terms of angular intervals over the 360-degree machine cycle. For example, an isolated event (or signature) that occurs at approximately 60-70 degrees is shown in FIG. 4.

At step 306, the isolated signature (i.e., signature of interest) 212 is digitized and recorded in correlator bank 206 as an event kernel via the transducer 210 and the signature identification and capture station 204. High-pass filtering techniques of the signal may be employed to eliminate any low frequency components contained in the original signal. Since the relevant information related to the signature of interest 212 is expected to exist in the high frequency components in the vicinity of the event, removal of low frequency components may potentially improve detection reliability. The kernel, $S$, is represented as the n-samples of the signature within the angular limits and may be expressed as $S = (S_1, S_2, ..., S_n)$ (1).

The event kernel is normalized via the signature identification and capture station 204 utilizing a two-step

EP 1 686 443 A1

process as provided below.

$$S \leftarrow S - \bar{s} \quad \text{(mean removal)}$$

$$S \leftarrow \frac{S}{\sqrt{\sum_{i=1}^{n} s_i^2}} \quad \text{(energy normalized to unity)}$$

A sample normalized event kernel 500 for the isolated signature is shown in FIG. 5 and may be displayed on monitor 208 at step 310. Energy normalization ensures that the normalized set of samples result in a signal with energy equal to unity. This further ensures that the correlation computations performed result in true correlation coefficients, which is typically desired in assigning semantics to the acyclic correlation plots.

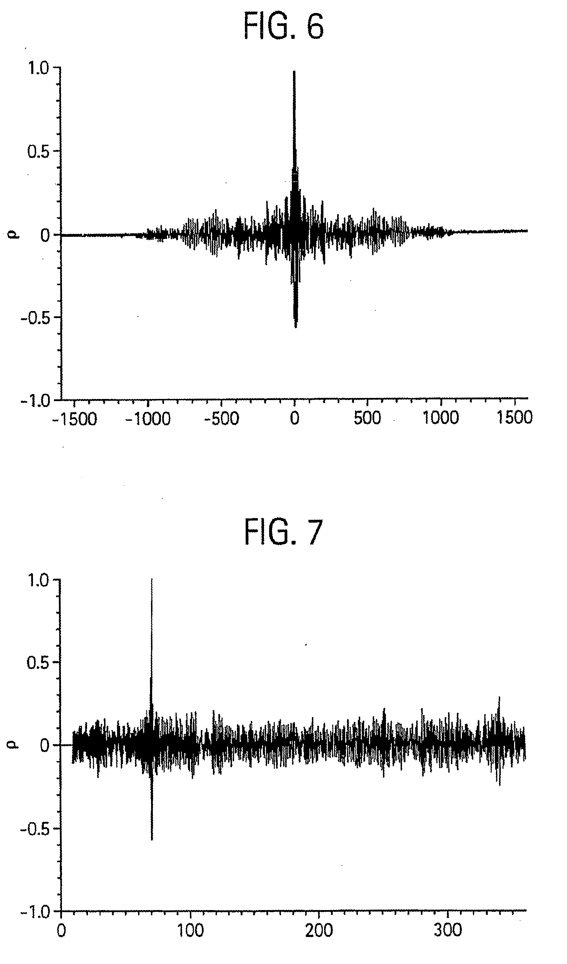

Optionally, computation of the acyclic autocorrelation of the normalized event kernel 500 may be performed at step 312 in order to determine whether it will have good localization capability. A sample acyclic autocorrelation of the event kernel is displayed at step 314 on monitor 208 as shown in FIG. 6. It will be appreciated that the peak to maximum sidelobe ratio of the acyclic autocorrelation of the event kernel as depicted in FIG. 6 is not insignificant. This may indicate that the data representing the normalized event kernel is not nearly independent, and localization of the event may not be as sharp as it might be with more nearly independent data. The autocorrelation data may, however, indicate that the signature may be sufficient for nominal demands of angular localization.

Apart from localization of the event, the correlation data also contains information about whether or not the event is present in another trace. Hence it can also be used merely for the detection of the presence or absence of an event in a given signal trace. This is important in applications where the event signature can be expected to change under unhealthy operating conditions. In such a case, the correlation plot using the stored event kernel will not produce any strong peaks and the absence of a strong correlation can be used to infer that the event signature has changed, thereby signaling the presence of potential anomalous operation. In one embodiment, a suitable threshold can be used on the correlation plot to ascertain the presence or absence of the event by determining whether or not any portion of the correlation signal is greater than the threshold as a means to infer the presence of the event signature of interest.

At step 315, the condition monitoring system computes the sliding cross-correlation of the normalized event kernel 500 against the top trace 102 of FIG. 1 from which the event kernel was extracted. The portion of the trace within the sliding window is normalized to zero mean and energy equal to unity before performing the cross-correlation. The cross-correlation is displayed on monitor 208 at step 316 and a sample cross-correlation of the event kernel (including monitor data) is shown in FIG. 7. In one embodiment of the invention, the peak value of the correlation plot is used to mark the time of event occurrence within the trace or signal being examined. In another embodiment, a threshold-specific examination of the correlation signal can be used to infer whether or not the event signature of interest is present.

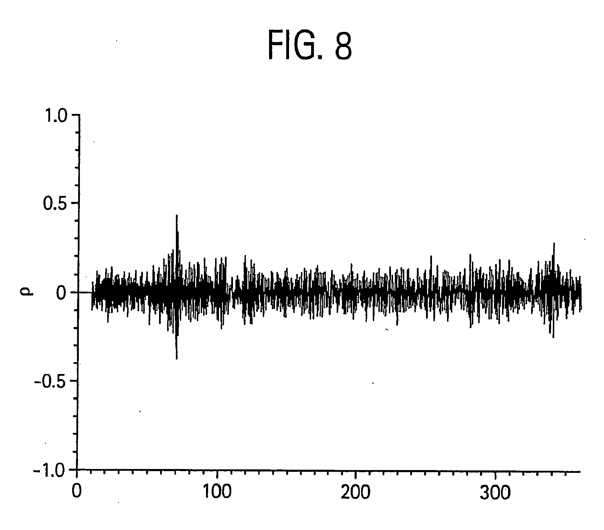

At step 318, the condition monitoring system evaluates the repeatability of the event kernel over the same equipment 202 within the same machine state. This may be accomplished by performing a sliding cross-correlation computation of the normalized event kernel 500 against, e.g., the middle trace 104 of FIG. 1. Again, the portion of the trace within the sliding window is normalized to zero mean and energy equal to unity prior to the cross-correlation. The results of the cross-correlation computation of step 318 is displayed on monitor 208 and a sample representation is shown in FIG. 8. Note that a useful cross-correlation peak appears but is reduced over its performance as shown in FIG. 7.

As it is unlikely that the machine 202 providing the test data changed significantly between the two traces shown in FIG. 1, it is suggested that the difference in cross-correlation performance is due to noise. Thus, it may be beneficial to collect a set of the same event kernels from correlator bank 206 and create an averaged event kernel from the set at step 322. Alternatively, or in addition, the variance of the cross-correlation may be estimated from a collected set of event kernels at step 324. At step 326, it is determined whether the operator of the signature identification and capture station 204 has completed the condition monitoring activities. If so, the process ends at step 328. Otherwise, the process returns to step 304, whereby the operator identifies another event of interest.

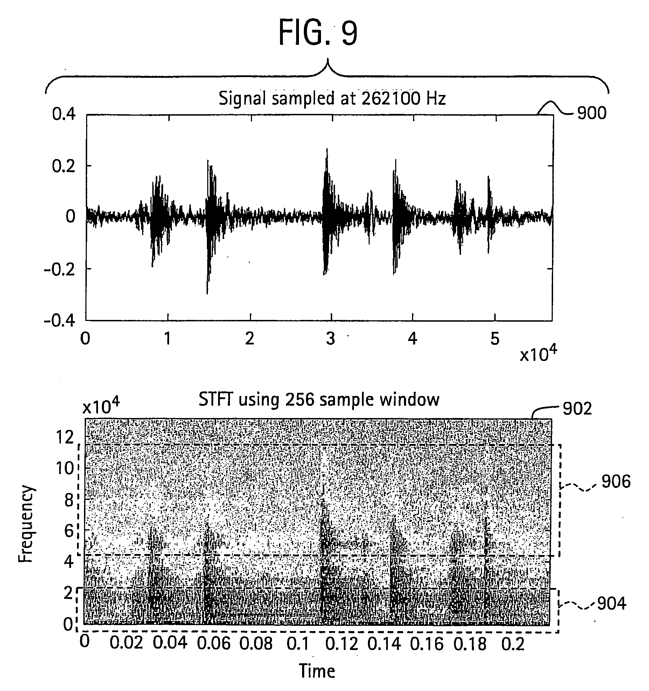

In another embodiment of the invention, the described process is implemented using data sampled and retained at ultrasonic range. This is motivated by the fact that machine noise in the ultrasonic range is expected to be quite low. This is expected to improve the sensitivity of event detection using cross-correlation as described here. FIG. 9 indicates a time trace 900 as well as signatures visible in a corresponding power spectral density plot 902, which shows the amount of noise present in the signal. It is clear that the surrounding machine noise that is present in the region 904, or lower frequency region, is significantly reduced in ultrasonic region 906. Creating kernels using data present in region 906 is expected to improve the performance on event localization. The process may involve using a band-pass filter or high-pass to retain signal information pertaining to region 906 only and then using it for the extraction of kernels.

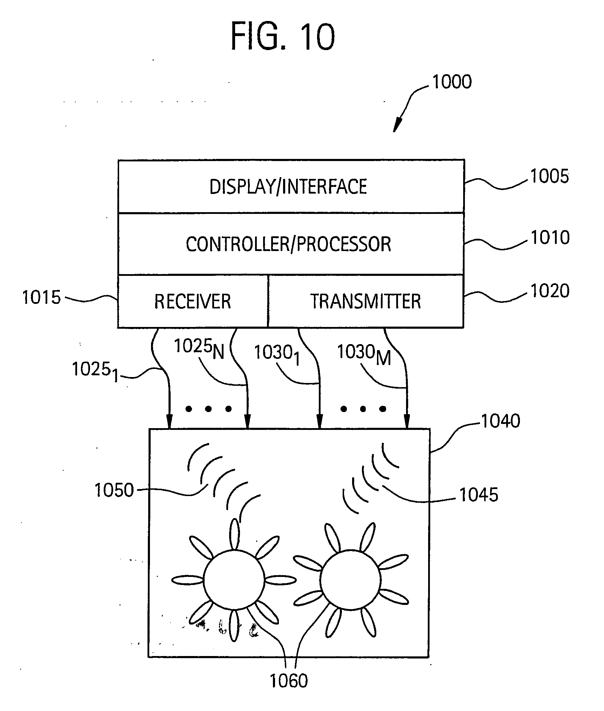

In another embodiment, an improvement to passive ultrasonic sensing is applied by replacing it with active acoustic sensing, whereby a set of one or more transducers launch acoustic waves into the machinery under diagnosis and monitor and analyze the returned acoustic waveforms using the process described herein. FIG. 10 illustrates an active acoustic machinery diagnostic analyzer 1000. The analyzer 1000 comprises a display/interface 1005, as well as a controller/processor unit 1010 that controls the actions of the analyzer. The analyzer further comprises a transmitter module 1020 that generates acoustic waveforms that are applied to cabled active acoustic transducers 10301-1030M where M is at least 1. The active acoustic transducers are attached to the housing of the machinery 1040 under diagnosis 1040. The active acoustic transducers $1030_1$-$1030_M$ radiate specially crafted excitation signals 1045 into the machinery 1040 under diagnosis. The signals 1045 may comprise audio and ultrasonic components. The signals 1045 interact with the moving parts 1060 of the machinery 1040 under diagnosis. The interactions modify the reflections of the signals 1045 to produce signals 1050. The signals 1050 may reveal the position and condition of various moving parts by a changing attenuation profile or the movement of a part may result in a change in Doppler. For example, the signals 1050 may be a frequency translation of the signals 1045 by an interaction with a moving rod. In this case, the instant of rod reversal would be indicated by a zero frequency translation. The signals 1050 are conducted through the housing of the machinery 1040 under diagnosis and sampled by cabled passive acoustic transducers 10251-1025N where N is at least 1. The sampled signals can be directly used to extract kernels and apply them for event detection in other traces.

As indicated above, the condition monitoring system performs pattern recognition for event identification (i.e., time-of-occurrence estimation and event type classification) utilizing a signature associated with a regularly running machine (e.g., one that exhibits periodic cycles of equal time characteristics). The signature may be an acoustic/seismic signature. The signature is digitalized and normalized utilizing a two-step process, resulting in a normalized event kernel. Computations such as autocorrelations and cross-correlations may be performed on the normalized event kernel.

As described above, the embodiments of the invention may be embodied in the form of computer implemented processes and apparatuses for practicing those processes. Embodiments of the invention may also be embodied in the form of computer program code containing instructions embodied in tangible media, such as floppy diskettes, CD-ROMs, hard drives, or any other computer readable storage medium, wherein, when the computer program code is loaded into and executed by a computer, the computer becomes an apparatus for practicing the invention. An embodiment of the present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits. The technical effect of the executable code is to perform pattern recognition for event identification such as time-of-occurrence estimation and event type classification.

## Claims

1. A system for implementing condition monitoring activities, comprising:

    a processor (204) in communication with a machine (202) being monitored, the processor (204) receiving signals output by the machine (202) via a signal conversion element (210) associated with the machine (202);
    a display device (205) in communication with the processor (204), the display device (205) providing signatures of the signals received from the signal conversion element (210);
    a means (204) for identifying, isolating, and capturing a signature (212) from the signatures presented on the display device (205);
    a means (204) for digitizing and recording the signature (212) as an event kernel;
    a means (204) for normalizing the event kernel by performing a mean removal and normalizing the energy to unity on results of the performing a mean removal; and
    a storage device (206) for storing normalized event kernels (500).

2. The system of claim 1, wherein the capture further includes at least one of:

    performing band-pass or high-pass filtering on the signature (212) for improving performance of event localization and extracting the signature (212) from the signatures presented on the display device (205); and
    extracting the signature (212) from the signatures presented on the display device (205), the signatures comprising waveforms reflected from machine (202) parts upon interaction with excitation waveforms radiated into the machine (202).

3. The system of claim 1, the event kernel represented as $S = (S_1, S_2, ..., S_n)$, wherein S is the event kernel, s represents a signature sample and n represents a number of signature samples.

4. The system of claim 3, wherein the mean removal is represented as $S \leftarrow S - \overline{s}$ and the normalizing the energy to unity on results of the performing a mean removal is represented as

$$S \leftarrow \frac{S}{\sqrt{\sum_{i=1}^{n} s_i^2}}$$

5. The system of claim 1, further comprising:

an other display device (208) in communication with the storage device (206) and the processor (204), wherein the storage device (206) further stores operational data associated with the machine (202); and
a means for performing at least one of:

computing an autocorrelation on the normalized event kernel (500); and
computing a cross-correlation on the normalized event kernel (500) against the operational data.

6. The system of claim 5, further comprising a means for:

evaluating repeatability of the event kernel over the machine (202) within the same machine state by performing a sliding cross-correlation computation of the normalized event kernel (500) against an event kernel associated with an other trace;
presenting on the other display device (208) a time of occurrence of the event kernel within the other trace, as the time where a cross-correlation plot has a peak value; and
displaying in response to a user-specific threshold value, whether or not the event kernel is identified within the other trace by using the user-specific threshold on the cross-correlation plot for revealing any values that exist which are greater than the user-specific threshold.

7. The system of claim 6, further comprising a means for evaluating results of the evaluating repeatability, the evaluating results comprising:

collecting a set of normalized event kernels (500) from the storage device (206) that are the same as a normalized event kernel identified; and
computing averages on the set of normalized event kernels (500).

8. The system of claim 7, further comprising a means for evaluating results of the evaluating repeatability, the evaluating results comprising:

collecting a set of normalized event kernels (500) from the storage device (206) that are the same as a normalized event kernel identified; and
computing a variance of the set of normalized event kernels (500) against the normalized event kernel identified.

9. The system of claim 1, wherein the signals output by the machine (202) are sampled via passive ultrasonic sensing and the signature is presented in a power spectral density plot (902) on the display device (208).

10. The system of claim 1, further comprising an analyzer (1000) for performing active acoustic sensing of signals, the analyzer (1000) comprising:

a transmitter module (1020) generating acoustic waveforms applied to cabled active acoustic transducers (10301-1030M), the active acoustic transducers (10301-1030M) coupled to housing of the machine (1040), the active acoustic sensing comprising:

radiating excitation signals (1045) into the machine (1040) via the active acoustic transducers (10301-1030M), the excitation signals (1045) interacting with moving parts (1060) of the machine (202); modifying reflections of the excitation signals (1045) resulting from the interacting, the modifying reflections resulting in secondary signals (1050); and

conducting the secondary signals (1050) through the housing (1040) for sampling, the sampling performed by passive acoustic transducers (10301-1030M) coupled to the machine (1040).

# FIG. 1

# FIG. 2

# FIG. 3

302 BEGIN → 304 ID EVENT OF INTEREST

306 DIGITIZE & RECORD EVENT RESULTING IN EVENT KERNEL

312 COMPUTE ACYCLIC AUTO-CORRELATION OF NORMALIZED EVENT KERNEL

308 NORMALIZE EVENT KERNEL

(OPT)

310 DISPLAY NORMALIZED EVENT KERNEL IN GRAPHICAL FORM

DISPLAY AUTO-CORRELATION IN GRAPHICAL FORM

314

315 COMPUTE SLIDING CROSS-CORRELATION OF NORMALIZED EVENT KERNEL AGAINST FIRST TRACE

316 DISPLAY CROSS-CORRELATION IN GRAPHICAL FORM WITH MONITOR DATA

318 EVALUTE REPEATABILITY OF NORMALIZED EVENT KERNEL-COMPUTE CROSS-CORRELATION OVER MIDDLE TRACE

DISPLAY SECOND CROSS-CORRELATION IN GRAPHICAL FORM

322 (OPT)

COLLECT SET OF SAME EVENT KERNELS & COMPUTE AVERAGES

320

324 (OPT)

COLLECT SET OF SAME EVENT KERNELS AND COMPUTE VARIANCES

328 END ← Yes ← 326 FINISHED ?

No

## FIG. 4

Signature of interest

## FIG. 5

500

## FIG. 6

## FIG. 7

# FIG. 8

# FIG. 9

Signal sampled at 262100 Hz — 900

STFT using 256 sample window — 902

906

904

Frequency

Time

# FIG. 10

1000

| DISPLAY/INTERFACE | | 1005 |
| CONTROLLER/PROCESSOR | | 1010 |
| RECEIVER | TRANSMITTER | |

1015

1020

$1025_1$

$1025_N$

$1030_1$

$1030_M$

• • •

• • •

1040

1050

1045

1060

**European Patent Office**

## EUROPEAN SEARCH REPORT

Application Number

EP 06 25 0485

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/078171 A1 (WEGERICH STEPHAN W ET AL) 22 April 2004 (2004-04-22) <br> * paragraph [0036] * <br> * paragraph [0048] - paragraph [0051] * <br> ----- | 1 | INV. <br> G05B23/02 |
| A | US 2001/049590 A1 (WEGERICH STEPHAN W) 6 December 2001 (2001-12-06) <br> ----- | | |

TECHNICAL FIELDS SEARCHED (IPC)

G05B
G07C

The present search report has been drawn up for all claims

| Place of search | Date of completion of the search | Examiner |
|---|---|---|
| The Hague | 25 April 2006 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 0485

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2006

| Patent document cited in search report | Publication date | Patent family member(s) | Publication date |
|---|---|---|---|
| US 2004078171 A1 | 22-04-2004 | US 2006036403 A1 | 16-02-2006 |
| US 2001049590 A1 | 06-12-2001 | AU 4351801 A | 17-09-2001 |
| | | CA 2401685 A1 | 13-09-2001 |
| | | EP 1264412 A2 | 11-12-2002 |
| | | JP 2003526859 T | 09-09-2003 |
| | | WO 0167623 A2 | 13-09-2001 |
| | | US 2006025970 A1 | 02-02-2006 |

For more details about this annex : see Official Journal of the European Patent Office, No. 12/82

EPO FORM P0459